# EUROPEAN PATENT SPECIFICATION

(11) **EP 4 362 050 B1**
(45) Date of publication and mention of the grant of the patent: **23.04.2025**
(21) Application number: 22383032.4
(22) Date of filing: 26.10.2022
(51) Int. Cl.: H01F 27/02, H01F 27/04, H01F 27/26, H01F 41/00

(54) **WATERPROOF ELECTROMAGNETIC DEVICE AND PRODUCTION METHOD THEREOF**
WASSERDICHTE ELEKTROMAGNETISCHE VORRICHTUNG UND HERSTELLUNGSVERFAHREN DAFÜR
DISPOSITIF ÉLECTROMAGNÉTIQUE ÉTANCHE À L'EAU ET SON PROCÉDÉ DE PRODUCTION

(43) Date of publication of application: 01.05.2024
(73) Proprietor: Premo, SL, 29590 Campanillas, Málaga (ES)
(72) Inventor: FERNÁNDEZ DE LA FUENTE, José Ramón, 18230 Atarfe (Granada) (ES); CAÑETE CABEZA, Claudio, 29631 Benalmádena (ES); ROJAS CUEVAS, Antonio, 29190 Málaga (ES); NAVARRO PÉREZ, Francisco Ezequiel, 08006 Barcelona (ES)
(74) Representative: Torner, Juncosa I Associats, SL

(56) References cited:
- EP-A1- 1 103 993
- WO-A1-2011/010440
- JP-A- 2007 124 458
- KR-B1- 101 412 971

## Description

### Technical field

The present application is directed towards a waterproof electromagnetic device comprising a magnetic core surrounded by at least one coil connected to connection pins of an electronic circuit board, the magnetic core, the surrounding at least one coil and the electronic circuit board being embedded in an enclosure overmolded there around.

### Background of the Invention

Document EP3089176A1 describes an electromagnetic device comprising an elongated magnetic core surrounded by a coil, the magnetic core and the coil being embedded in a waterproof enclosure. This document does not describe how to maintain the magnetic core centered within the mold during the overmolding thereof.

Document US2021376476A1 also describes a similar electromagnetic device in which the magnetic core and the coil are supported in a bobbin introduced in the mold to center the magnetic core during the overmolding operation, but this solution is labor intensive requiring the fabrication and the placement of said bobbin.

Other documents, such documents US10893623B2 (Valeo), EP0472199A1 and other similar documents, describe how to retain an element within a mold using retractile levers integrated in the mold, but this technical solution greatly increases the production and maintenance cost of the mold.

Documents KR101412971B1, JP2007124458A and WO2011/010440A1 disclose an electromagnetic device according to the preamble of claim 1.

The present invention solves those and other problems.

### Description of the Invention

According to a first aspect, the present invention concerns to a waterproof electromagnetic device, as defined in claim 1.

Said electromagnetic device can be, for example, an inductor, an antenna, a near field antenna, an electric transformer, among others.

The proposed waterproof electromagnetic device comprises, in a manner already known in the state of the art, the following features:
a magnetic core surrounded by at least one coil;
an electronic circuit board including at least connection pins electrically connected to the at least one coil;
an enclosure overmolded on a waterproof manner surrounding the magnetic core, the surrounding at least one coil and the electronic circuit board;

The overmolding, typically using a plastic or a thermoplastic material, creates a surrounding hard shell which seals all the water channels communicating the interior elements with the exterior of the enclosure, preventing the entrance of water therein and also increasing the structural resistance of the waterproof electromagnetic device, for example against impacts.

The present invention further proposes, in a manner not known from the available state of the art, the inclusion of several protrusions projecting from the magnetic core towards an external surface of the enclosure, providing a centering of the magnetic core within the enclosure during the overmoulding operation.

According to that, the magnetic core includes protrusions extending from the magnetic core, extending through the enclosure, each protrusion including a protrusion tip reaching the external surface of the enclosure.

It will be understood that the external surface of the enclosure is the surface determining its envelope, which is defined by the shape of the mold where it has been injected.

Those protrusions extend preferably from at least two opposed sides of the magnetic core in two opposed directions. It is also preferred to include at least three protrusions on the same side of the magnetic core to provide stability when the magnetic core is inserted in the mold before the overmolding, being then the magnetic core supported on the protrusion tips of those at least three protrusions on the same side of the magnetic core.

The magnetic core is preferably an elongated magnetic core which define a longitudinal direction, in which case the protrusions extend preferably in a radial direction regarding this longitudinal direction.

According to an embodiment of the present invention, the electronic circuit board is partially embedded in the magnetic core, providing a support for the electronic circuit board during the overmolding operation, the magnetic core supporting the electronic circuit board away from the surfaces of the enclosure mold during the overmoulding operation.

Preferably the connection pins of the electronic circuit board are connected to electrically exposed ends of electric cables. The connection pins and the electrically exposed ends of the electric cables will be also embedded in the enclosure and the electric cables will extend outside the enclosure. In that manner, the electromagnetic device signals can we communicated through said cables, and the connection between the cables and the coil is waterproof and has an increased resistance.

According to a second aspect described in claim 9, the present invention is also directed towards a production method for producing a waterproof electromagnetic device.

The proposed method comprises, in a manner already known in the state of the art, the following:
producing a magnetic core surrounded by at least one coil, the at least one coil being connected to connection pins of an electronic circuit board;
inserting the magnetic core, the surrounding at least one coil and the electronic circuit board in an enclosure mold and closing the enclosure mold;
overmoulding within the enclosure mold an enclosure on a waterproof manner surrounding the magnetic core, the at least one coil and the electronic circuit board, obtaining the waterproof electromagnetic device, and extracting the waterproof electromagnetic device from the enclosure mold.

The method also comprises, in a manner not known from the state of the art, the following:
the magnetic core is produced including several protrusions projecting from the magnetic core in radial directions, each protrusion including a protrusion tip which contacts with the enclosure mold when the magnetic core is introduced in the enclosure mold, providing a centering of the magnetic core within the enclosure mold during the overmoulding of the enclosure.

According to that, the magnetic core is produced including protrusions extending from the magnetic core away from said magnetic core, each protrusion defining a protrusion tip on a distal end thereof.

When the magnetic core, and the coil and electric circuit board attached to the magnetic core, are introduced in the enclosure mold, those protrusion tips contact with inner surfaces of the enclosure mold keeping the rest of the magnetic core and the other elements attached thereto away from inner surfaces of the enclosure mold and in a centered position, avoiding its movement during the overmolding operation.

Then, with the enclosure mold closed, the molten material constitutive of the enclosure is injected into the enclosure mold, completely surrounding the elements contained therein except for the protrusion tips, which will be coincident with the external surface of the formed enclosure in those points where the protrusion tips contact with the inner surface of the mold.

To electrically insulate the magnetic core, it is also proposed to optionally cover the protrusion tips with a waterproof and electrically insulating seal, or with a waterproof and electrically insulating seal made of resin, before the insertion of the magnetic core in the enclosure mold or after the extraction of the waterproof electromagnetic device from the mold.

Preferably the magnetic core is an injection molded magnetic core, for example made of composite materials comprising a polymeric matrix with embedded hard magnetic filler particles.

According to an embodiment of the proposed method, to produce the magnetic core a portion of the electronic circuit board is inserted in a core mold, and the magnetic core is produced by molding in said core mold, obtaining a magnetic core with the electronic circuit board attached thereto and partially embedding therein in a position selected to keep the electronic circuit board away from the enclosure mold during the overmolding of the enclosure.

### Brief description of the Figures

The foregoing and other advantages and features will be more fully understood from the following detailed description of an embodiment with reference to the accompanying drawings, to be taken in an illustrative and non-limitative manner, in which:

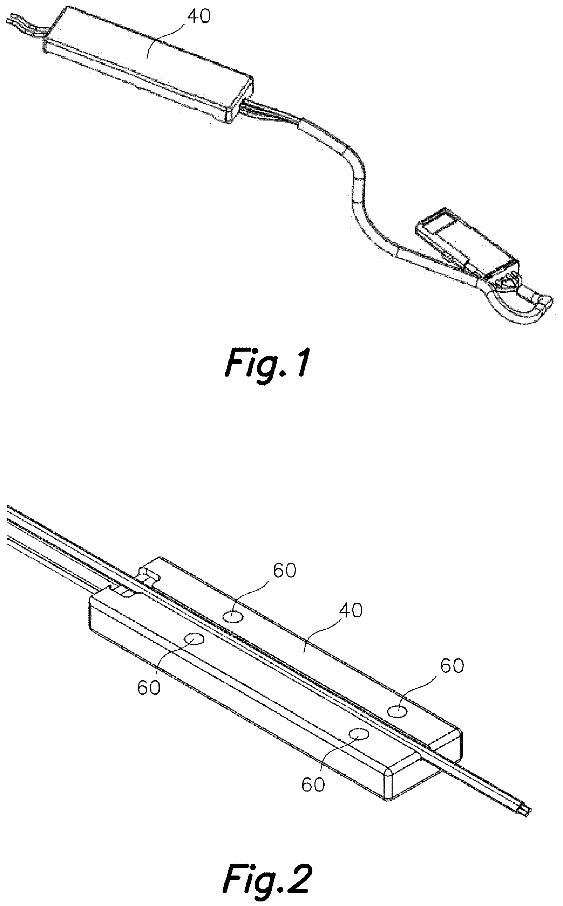

Fig. 1 shows a perspective view of the waterproof electromagnetic device, where it is shown the enclosure and the cables exiting said enclosure with an electric connector at one distal end of said cables away from the enclosure;
Fig. 2 shows a perspective view of the waterproof electromagnetic device with the cable routing longitudinal groove;
Fig. 3A shows a transversal cross section of the waterproof electromagnetic device coincident with the protrusions of the magnetic core;
Fig. 3B shows a longitudinal cross section of the waterproof electromagnetic device coincident with the cables exiting the enclosure;
Fig. 4 shows a top view of the same embodiment shown in Fig. 2;

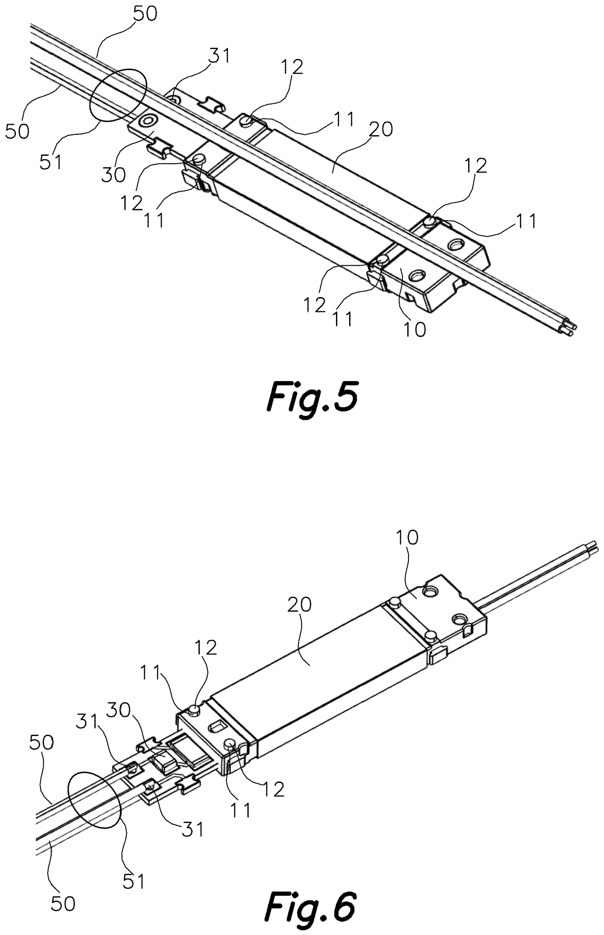

Fig. 5 shows a perspective view of the waterproof electromagnetic device shown in Fig. 2 without the enclosure;
Fig. 6 shows the same waterproof electromagnetic device devoid of enclosure shown in Fig. 5 but from the inverse side.

### Detailed Description of the Invention and of particular embodiments

According to the preferred embodiment of the present invention, the proposed waterproof electromagnetic device comprises a magnetic core 10 surrounded by at least one coil 20 wounded therearound, an electronic circuit board 30 including at least connection pins 31 electrically connected to the at least one coil 20, and an enclosure 40 overmolded on a waterproof manner surrounding the magnetic core 10, the at least one coil 20 and the electronic circuit board 30.

Typically, the coil 20 will be one coil 20 wound around one X axis of the magnetic core 10, or two coils 20 wound around two orthogonal axis X and Y of the magnetic core 10 or three coils 20 wound around three orthogonal axis X, Y and Z of the magnetic core 10.

The proposed magnetic core 10 further includes several protrusions 11 projecting from the magnetic core 10 towards an external surface of the enclosure 40, so that a centering of the magnetic core 10 within the enclosure 40 is provided during the overmoulding operation.

Preferably the electronic circuit board 30 is partially embedded in the magnetic core 10, so that it is attached thereto during the overmolding of the enclosure, the magnetic core 10 maintaining the position of the electronic circuit board 30 during the overmolding of the enclosure 40.

The connection pins 31 of the electronic circuit board 30 are preferably connected to electrically exposed ends of electric cables 50. In such case, the connection pins 31 and the electrically exposed ends of the electric cables 50 will be also embedded in the enclosure 40, a portion of the electric cables 50 extending outside the enclosure 40. This feature ensures the proper signal transmission and the waterproofing of the connection between the electric cables 50 and the connection pins 31.

According to an embodiment, each electric cable 50 includes a sealing portion 51 not embedded in the enclosure 40. Said sealing portion 51 will be comprised between two portions of the cable embedded in the enclosure 40. Each sealing portion 51 will be covered by a waterproof and electrically insulating seal 60, or by a waterproof and electrically insulating seal 60 made of resin, providing an additional waterproof sealing.

Preferably, the sealing portion 51 of the electric cables 50 are placed in a cavity of the enclosure which is filled with the waterproof and electrically insulating seal 60.

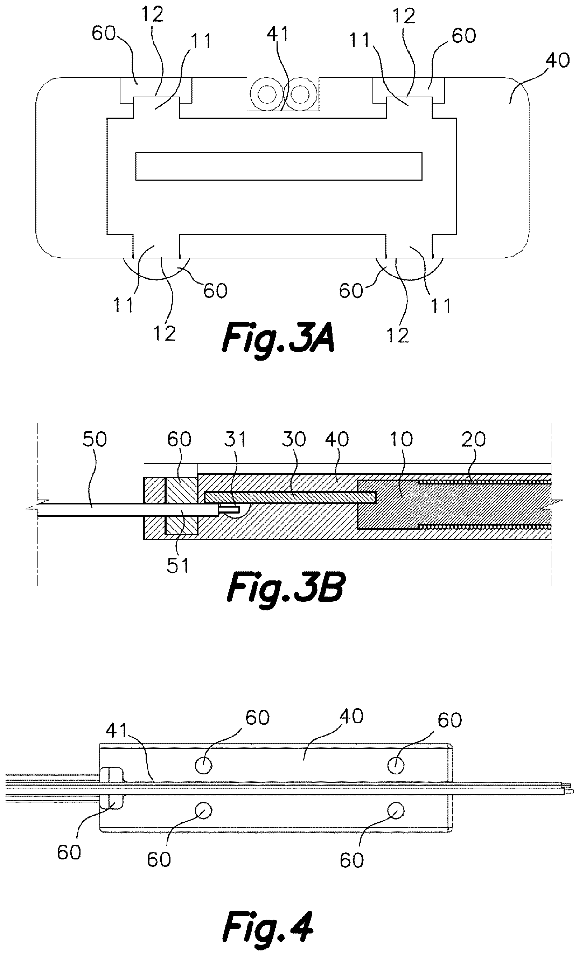

An embodiment of this feature can be seen in Fig. 3B, where the cavity is a blind hole. The inner surfaces of the blind hole define two facing surfaces of the enclosure 40, each cable passing through both facing surfaces defining the sealing portion 51 of the cable between said facing surfaces. The insulating seal 60 fills the blind hole completely surrounding the sealing portion 51.

According to an alternative embodiment, the cavity can be a through hole of the enclosure 40.

Each protrusion 11 defines a protrusion tip 12 on its distal end regarding the rest of the magnetic core 10.

According to an embodiment, the external surface of the enclosure 40 includes depressed regions defining cavities. Optionally, at least some of the protrusion tips 12 of the protrusions 11 will reach the external surface of the enclosure 40 on the depressed regions of the external surface defining the cavities, so that said protrusion tips 12 will be housed within a cavity. In any case, preferably the protrusion tips 12 are covered by waterproof and electrically insulating seal 60, or by a waterproof and electrically insulating seal 60 made of resin.

When the protrusion tips 12 are housed within a cavity of the enclosure, the insulating seal 60 may fill said cavity and also may be flush with the external surface of the enclosure surrounding the cavity, providing a flat enclosure 40. This embodiment can be seen in Fig. 3A (upper side).

According to an alternative embodiment, the protrusion tips 12 are flush with the enclosure 40, in which case the insulating seal 60 may be applied on top of the enclosure 40, producing a bulge. This embodiment can be seen in Fig. 3A (lower side). Preferably both upper and lower sides of the enclosure 40 have the same configuration.

Optionally, the external surface of the enclosure 40 can include a longitudinal groove 41 extending along the entire length of the enclosure 40 for cable routing.

The present invention also proposed a production method for producing a waterproof electromagnetic device such the electromagnetic device described above.

The proposed method comprises producing a magnetic core 10 surrounded by at least one coil 20, the at least one coil 20 being connected to connection pins 31 of an electronic circuit board 30, inserting the magnetic core 10, the surrounding at least one coil 20 and the electronic circuit board 30 in an enclosure mold and closing the enclosure mold, and overmoulding within the enclosure mold an enclosure 40 on a waterproof manner surrounding the magnetic core 10, the at least one coil 20 and the electronic circuit board 30, obtaining the waterproof electromagnetic device. Later, the waterproof electromagnetic device is extracted from the enclosure mold.

The method further proposed to produce the magnetic core 10 including several protrusions 11 projecting from the magnetic core 10 in radial directions, each protrusion 11 including a protrusion tip 12 which contacts with the inner surfaces of the enclosure mold when the magnetic core 10 is introduced in the enclosure mold, providing a centering of the magnetic core 10 within the enclosure mold during the overmoulding of the enclosure 40.

Preferably the enclosure mold includes protruding centering configurations complementary with the protrusion tips 12 which protrude from the inner surface of the enclosure mold. Those protruding centering configurations determine cavities in the external surface of the enclosure 40 once overmolded within the enclosure mold.

In this case, the protrusion tips 12 will contact the enclosure mold in the protruding centering configurations when inserted in the enclosure mold so that, after the overmolding, the protrusion tips 12 will be coincident with the external surface of the enclosure 40 within said cavities.

It is also proposed to cover the protrusion tips 12 with a waterproof and electrically insulating seal 60, for example made of resin, either before the insertion of the magnetic core 10 in the enclosure mold or after the extraction of the waterproof electromagnetic device from the enclosure mold.

When the protrusion tips are coincident with the external surface of the enclosure in said cavities, the waterproof and electrically insulating seal 60 will fill said cavities, obtaining a flush and smooth external surface of the resulting waterproof electromagnetic device.

According to an embodiment, to produce the magnetic core 10, a portion of the electronic circuit board 30 is inserted in a core mold, and the magnetic core 10 is produced by molding in said core mold. As a result, a magnetic core 10 with the electronic circuit board 30 attached thereto and partially embedding therein will be obtained. The position of the electronic circuit board 30 in regard to the magnetic core 10 will be selected to keep the electronic circuit board 30 supported by the magnetic core 10 away from the inner surfaces of the enclosure mold during the overmolding of the enclosure 40.

Preferably, before the insertion of the magnetic core 10 in the enclosure mold, the connection pins 31 are connected to electrically exposed ends of electric cables 50, for example by welding. Later, the magnetic core 10, the at least one coil 20 and the electronic circuit board 30 with the electric cables 50 connected thereto will be inserted in the enclosure mold, the electric cables 50 extending outside the enclosure mold through cable exit openings provided in the enclosure mold. The overmolding operation will then produce the enclosure 40 embedding also the connection pins 31, the electrically exposed end of each electric cable 50 and a portion of each electric cable 50, which is contained within the enclosure mold between the connection pins 31 and the cable exit openings of the enclosure mold, ensuring a proper waterproofing of the connection between the cables and the connection pins 31.

Preferably, the enclosure mold comprises protruding reserves which, when the enclosure mold is closed, cover a sealing portion 51 of each electric cable 50 contained within the enclosure mold preventing the sealing portions 51 to be embedded in the enclosure 40. The protruding reserves are separated from the cable exit openings of the enclosure mold through a distance in which a portion of the electric cables will be overmolded.

In this case, the electric cables 50 are positioned within the enclosure mold positioning a sealing portion 51 of each electric cable 50 in correspondence with the complementary protruding reserves of the enclosure mold, producing an enclosure with a sealing portion 51 of each cable 50 exposed and comprised between two portions of the electric cables embedded in the enclosure 40.

After the extraction of the waterproof electromagnetic device from the enclosure mold, the sealing portion 51 of each electric cable 50 is covered with a waterproof and electrically insulating seal 60 optionally made of resin, improving the waterproofing of the cables.

## Claims

1. A waterproof electromagnetic device, comprising:
a magnetic core (10) surrounded by at least one coil (20);
an electronic circuit board (30) including at least connection pins (31) electrically connected to the at least one coil (20);
an enclosure (40) overmolded on a waterproof manner surrounding the magnetic core (10), the at least one coil (20) and the electronic circuit board (30);
**characterized in that**
the magnetic core (10) further includes several protrusions (11) projecting from the magnetic core (10) towards an external surface of the enclosure (40), so that a centering of the magnetic core (10) within the enclosure (40) is provided during the overmoulding operation.

2. The waterproof electromagnetic device according to claim 1 wherein the protrusions (11) extend from at least two opposed sides of the magnetic core (10) in two opposed directions.

3. The waterproof electromagnetic device according to claim 1 or 2 wherein the electronic circuit board (30) is partially embedded in the magnetic core (10).

4. The waterproof electromagnetic device according to claim 1, 2 or 3 wherein the connection pins (31) are connected to electrically exposed ends of electric cables (50), the connection pins (31) and the electrically exposed ends of the electric cables (50) being embedded in the enclosure (40) and the electric cables (50) extending outside the enclosure (40).

5. The waterproof electromagnetic device according to claim 4 wherein each electric cable (50) includes a sealing portion (51), adjacent to one end of the waterproof electromagnetic device, not embedded in the enclosure (40) and comprised between two portions of the cable embedded in the enclosure (40), each sealing portion (51) being covered by a waterproof and electrically insulating seal (60), or by a waterproof and electrically insulating seal (60) made of resin.

6. The waterproof electromagnetic device according to claim 5 wherein the sealing portion (51) of the electric cables (50) are placed in a cavity of said enclosure, which is filled with the waterproof and electrically insulating seal (60).

7. The waterproof electromagnetic device according to any preceding claim wherein protrusion tips (12) of the protrusions (11) reaching the external surface of the enclosure (40) or reaching the external surface of the enclosure (40) and housed in a cavity defined in the external surface of the enclosure (40), are covered by waterproof and electrically insulating seal (60), or by a waterproof and electrically insulating seal (60) made of resin.

8. The waterproof electromagnetic device according to any preceding claim wherein the external surface of the enclosure (40) includes a longitudinal groove (41) extending along the entire length of the enclosure (40) for cable routing.

9. A production method for producing a waterproof electromagnetic device, the method comprising:
producing a magnetic core (10) surrounded by at least one coil (20), the at least one coil (20) being connected to connection pins (31) of an electronic circuit board (30);
inserting the magnetic core (10), the surrounding at least one coil (20) and the electronic circuit board (30) in an enclosure mold and closing the enclosure mold;
overmoulding an enclosure (40) within the enclosure mold on a waterproof manner surrounding the magnetic core (10), the at least one coil (20) and the electronic circuit board (30), obtaining the waterproof electromagnetic device, and extracting the waterproof electromagnetic device from the enclosure mold;
**characterized in that**
the magnetic core (10) is produced including several protrusions (11) projecting from the magnetic core (10), each protrusion (11) including a protrusion tip (12) which contacts with the enclosure mold when the magnetic core (10) is introduced in the enclosure mold, providing a centering of the magnetic core (10) within the enclosure mold during the overmoulding of the enclosure (40).

10. The production method according to claim 9 wherein the protrusion tips (12) contact the enclosure mold in protruding centering configurations of the enclosure mold which determine cavities in an external surface of the enclosure (40), so that the protrusion tips (12) are coincident with the external surface of the enclosure (40) within said cavities.

11. The production method according to claim 9 or 10 wherein the protrusion tips (12) are covered with a waterproof and electrically insulating seal (60), or with a waterproof and electrically insulating seal (60) made of resin, before the insertion of the magnetic core (10) in the enclosure mold or after the extraction of the waterproof electromagnetic device from the enclosure mold.

12. The production method according to claim 9, 10 or 11 wherein to produce the magnetic core (10), a portion of the electronic circuit board (30) is inserted in a core mold, and the magnetic core (10) is produced by molding in said core mold, obtaining a magnetic core (10) with the electronic circuit board (30) attached thereto and partially embedding therein in a position selected to keep the electronic circuit board (30) away from the enclosure mold during the overmolding of the enclosure (40).

13. The production method according to any preceding claim 9 to 12 wherein, before the insertion of the magnetic core (10) in the enclosure mold, the connection pins (31) are connected to electrically exposed ends of electric cables (50), and later the magnetic core (10), the at least one coil (20) and the electronic circuit board (30) with the electric cables (50) connected thereto are inserted in the enclosure mold, the electric cables (50) extending outside the enclosure mold through cable exit openings of the enclosure mold, the overmolding producing the enclosure (40) embedding also the connection pins (31), the electrically exposed end of each electric cable (50) and a portion of each electric cable (50).

14. The production method according to claim 13 wherein the electric cables (50) are positioned within the enclosure mold positioning a sealing portion (51) of each electric cable (50) in correspondence with protruding reserves of the enclosure mold which, when the enclosure mold is closed, covers the sealing portion (51) of each electric cable (50) preventing the sealing portions (51) to be embedded in the enclosure (40), the protruding reserves covering the sealing portion (51) of the electric cables (50) being separated from the cable exit openings of the enclosure mold through a distance in which a portion of the electric cables will be overmolded.

15. The production method according to claim 14 wherein after the extraction of the waterproof electromagnetic device from the enclosure mold, the sealing portion (51) of each electric cable (50) is covered by a waterproof and electrically insulating seal (60), or by a waterproof and electrically insulating seal (60) made of resin.

## Patentansprüche

1. Wasserdichte elektromagnetische Vorrichtung, umfassend:
einen Magnetkern (10), der von mindestens einer Spule (20) umgeben ist;
eine elektronische Leiterplatte (30), die mindestens Verbindungsstifte (31) beinhaltet, die elektrisch mit der mindestens einen Spule (20) verbunden sind;
ein Gehäuse (40), das den Magnetkern (10), die mindestens eine Spule (20) und die elektronische Leiterplatte (30) umgebend auf wasserdichte Weise umspritzt ist;
**dadurch gekennzeichnet, dass**
der Magnetkern (10) ferner mehrere Vorsprünge (11) beinhaltet, die von dem Magnetkern (10) zu einer äußeren Oberfläche des Gehäuses (40) hin vorstehen, so dass während des Umspritzvorgangs eine Zentrierung des Magnetkerns (10) innerhalb des Gehäuses (40) bereitgestellt wird.

2. Wasserdichte elektromagnetische Vorrichtung nach Anspruch 1, wobei sich die Vorsprünge (11) von mindestens zwei gegenüberliegenden Seiten des Magnetkerns (10) in zwei entgegengesetzte Richtungen erstrecken.

3. Wasserdichte elektromagnetische Vorrichtung nach Anspruch 1 oder 2, wobei die elektronische Leiterplatte (30) teilweise in den Magnetkern (10) eingebettet ist.

4. Wasserdichte elektromagnetische Vorrichtung nach Anspruch 1, 2 oder 3, wobei die Verbindungsstifte (31) mit elektrisch freiliegenden Enden von elektrischen Kabeln (50) verbunden sind, wobei die Verbindungsstifte (31) und die elektrisch freiliegenden Enden der elektrischen Kabel (50) in das Gehäuse (40) eingebettet sind und die elektrischen Kabel (50) sich außerhalb des Gehäuses (40) erstrecken.

5. Wasserdichte elektromagnetische Vorrichtung nach Anspruch 4, wobei jedes elektrische Kabel (50) einen Abdichtungsabschnitt (51) beinhaltet, benachbart zu einem Ende der wasserdichten elektromagnetischen Vorrichtung, nicht eingebettet in das Gehäuse (40) und umfasst zwischen zwei Abschnitten des in das Gehäuse (40) eingebetteten Kabels, wobei jeder Abdichtungsabschnitt (51) durch eine wasserdichte und elektrisch isolierende Dichtung (60) abgedeckt ist oder durch eine wasserdichte und elektrisch isolierende Dichtung (60) aus Harz abgedeckt ist.

6. Wasserdichte elektromagnetische Vorrichtung nach Anspruch 5, wobei der Abdichtungsabschnitt (51) der elektrischen Kabel (50) in einem Hohlraum des Gehäuses angeordnet ist, der mit der wasserdichten und elektrisch isolierenden Dichtung (60) gefüllt ist.

7. Wasserdichte elektromagnetische Vorrichtung nach einem der vorhergehenden Ansprüche, wobei die Vorsprungsspitzen (12) der Vorsprünge (11), die die äußere Oberfläche des Gehäuses (40) erreichen oder die äußere Oberfläche des Gehäuses (40) erreichen und in einem in der äußeren Oberfläche des Gehäuses (40) definierten Hohlraum aufgenommen sind, durch eine wasserdichte und elektrisch isolierende Dichtung (60) oder durch eine wasserdichte und elektrisch isolierende Dichtung (60) aus Harz abgedeckt sind.

8. Wasserdichte elektromagnetische Vorrichtung nach einem der vorhergehenden Ansprüche, wobei die äußere Oberfläche des Gehäuses (40) eine Längsnut (41) beinhaltet, die sich entlang der gesamten Länge des Gehäuses (40) erstreckt, um Kabel zu führen.

9. Herstellungsverfahren zur Herstellung einer wasserdichten elektromagnetischen Vorrichtung, wobei das Verfahren Folgendes umfasst:
Herstellen eines Magnetkerns (10), der von mindestens einer Spule (20) umgeben ist, wobei die mindestens eine Spule (20) mit Verbindungsstiften (31) einer elektronischen Leiterplatte (30) verbunden ist;
Einsetzen des Magnetkerns (10), der umgebenden mindestens einen Spule (20) und der elektronischen Leiterplatte (30) in eine Gehäuseform und Schließen der Gehäuseform;
Umspritzen eines Gehäuses (40) innerhalb der Gehäuseform auf wasserdichte Weise, wobei der Magnetkern (10), die mindestens eine Spule (20) und die elektronische Leiterplatte (30) umgeben werden, Erhalten der wasserdichten elektromagnetischen Vorrichtung und Entnehmen der wasserdichten elektromagnetischen Vorrichtung aus der Gehäuseform;
**dadurch gekennzeichnet, dass**
der Magnetkern (10) hergestellt wird, wobei er mehrere Vorsprünge (11) beinhaltet, die von dem Magnetkern (10) vorstehen, wobei jeder Vorsprung (11) eine Vorsprungsspitze (12) beinhaltet, die mit der Gehäuseform in Kontakt kommt, wenn der Magnetkern (10) in die Gehäuseform eingeführt wird, wobei eine Zentrierung des Magnetkerns (10) innerhalb der Gehäuseform während des Umspritzens des Gehäuses (40) bereitgestellt wird.

10. Herstellungsverfahren nach Anspruch 9, wobei die Vorsprungsspitzen (12) mit der Gehäuseform in vorstehenden Zentrierkonfigurationen der Gehäuseform in Kontakt kommen, die Hohlräume in einer äußeren Oberfläche des Gehäuses (40) bestimmen, so dass die Vorsprungsspitzen (12) mit der äußeren Oberfläche des Gehäuses (40) innerhalb der Hohlräume übereinstimmen.

11. Herstellungsverfahren nach Anspruch 9 oder 10, wobei die Vorsprungsspitzen (12) mit einer wasserdichten und elektrisch isolierenden Dichtung (60) oder mit einer wasserdichten und elektrisch isolierenden Dichtung (60) aus Harz bedeckt werden, bevor der Magnetkern (10) in die Gehäuseform eingesetzt wird oder nachdem die wasserdichte elektromagnetische Vorrichtung aus der Gehäuseform entnommen wird.

12. Herstellungsverfahren nach Anspruch 9, 10 oder 11, wobei zur Herstellung des Magnetkerns (10) ein Teil der elektronischen Leiterplatte (30) in eine Kernform eingesetzt wird und der Magnetkern (10) durch Formen in der Kernform hergestellt wird, wobei ein Magnetkern (10) mit der daran angebrachten elektronischen Leiterplatte (30) erhalten wird und diese teilweise darin eingebettet wird, an einer Position, die dazu ausgewählt ist, die elektronische Leiterplatte (30) während des Umspritzens des Gehäuses (40) von der Gehäuseform fernzuhalten.

13. Herstellungsverfahren nach einem der vorhergehenden Ansprüche 9 bis 12, wobei vor dem Einsetzen des Magnetkerns (10) in die Gehäuseform die Verbindungsstifte (31) mit elektrisch freiliegenden Enden von elektrischen Kabeln (50) verbunden werden und später der Magnetkern (10), die mindestens eine Spule (20) und die elektronische Leiterplatte (30) mit den damit verbundenen elektrischen Kabeln (50) in die Gehäuseform eingesetzt werden, wobei die elektrischen Kabel (50) sich außerhalb der Gehäuseform durch Kabelausgangsöffnungen der Gehäuseform erstrecken, wobei das Umspritzen das Gehäuse (40) herstellt, wobei auch die Verbindungsstifte (31), das elektrisch freiliegende Ende jedes elektrischen Kabels (50) und einen Abschnitt jedes elektrischen Kabels (50) eingebettet werden.

14. Herstellungsverfahren nach Anspruch 13, wobei die elektrischen Kabel (50) innerhalb der Gehäuseform positioniert sind, wobei ein Abdichtungsabschnitt (51) jedes elektrischen Kabels (50) in Übereinstimmung mit vorstehenden Reserven der Gehäuseform positioniert wird, die bei geschlossener Gehäuseform den Abdichtungsabschnitt (51) jedes elektrischen Kabels (50) abdeckt, wobei verhindert wird, dass die Abdichtungsabschnitte (51) in das Gehäuse (40) eingebettet werden, wobei die vorstehenden Reserven, die den Abdichtungsabschnitt (51) der elektrischen Kabel (50) abdecken, von den Kabelausgangsöffnungen der Gehäuseform durch einen Abstand getrennt sind, in dem ein Abschnitt der elektrischen Kabel umspritzt wird.

15. Herstellungsverfahren nach Anspruch 14, wobei nach der Entnahme der wasserdichten elektromagnetischen Vorrichtung aus der Gehäuseform der Abdichtungsabschnitt (51) jedes elektrischen Kabels (50) durch eine wasserdichte und elektrisch isolierende Dichtung (60) oder durch eine wasserdichte und elektrisch isolierende Dichtung (60) aus Harz abgedeckt wird.

## Revendications

1. Dispositif électromagnétique étanche à l'eau, comprenant :
un noyau magnétique (10) entouré par au moins une bobine (20) ;
une carte de circuit électronique (30) comportant au moins des broches de connexion (31) reliées électriquement à l'au moins une bobine (20) ;
une enceinte (40) surmoulée de manière étanche à l'eau entourant le noyau magnétique (10), l'au moins une bobine (20) et la carte de circuit électronique (30) ;
**caractérisé en ce que**
le noyau magnétique (10) comporte en outre plusieurs protubérances (11) faisant saillie à partir du noyau magnétique (10) vers une surface externe de l'enceinte (40), de sorte qu'un centrage du noyau magnétique (10) au sein de l'enceinte (40) est assuré pendant l'opération de surmoulage.

2. Dispositif électromagnétique étanche à l'eau selon la revendication 1, dans lequel les protubérances (11) s'étendent à partir d'au moins deux côtés opposés du noyau magnétique (10) dans deux directions opposées.

3. Dispositif électromagnétique étanche à l'eau selon la revendication 1 ou 2, dans lequel la carte de circuit électronique (30) est partiellement incorporée dans le noyau magnétique (10).

4. Dispositif électromagnétique étanche à l'eau selon la revendication 1, 2 ou 3, dans lequel les broches de connexion (31) sont reliées à des extrémités électriquement exposées de câbles électriques (50), les broches de connexion (31) et les extrémités électriquement exposées des câbles électriques (50) étant incorporées dans l'enceinte (40) et les câbles électriques (50) s'étendant à l'extérieur de l'enceinte (40).

5. Dispositif électromagnétique étanche à l'eau selon la revendication 4, dans lequel chaque câble électrique (50) comporte une portion de scellement (51), adjacente à une extrémité du dispositif électromagnétique étanche à l'eau, non incorporée dans l'enceinte (40) et comprise entre deux portions du câble incorporées dans l'enceinte (40), chaque portion de scellement (51) étant recouverte par un joint étanche à l'eau et électriquement isolant (60), ou par un joint étanche à l'eau et électriquement isolant (60) en résine.

6. Dispositif électromagnétique étanche à l'eau selon la revendication 5, dans lequel la portion de scellement (51) des câbles électriques (50) est placée dans une cavité de ladite enceinte, qui est remplie avec le joint étanche à l'eau et électriquement isolant (60).

7. Dispositif électromagnétique étanche à l'eau selon l'une quelconque des revendications précédentes, dans lequel des pointes de protubérance (12) des protubérances (11) atteignant la surface externe de l'enceinte (40) ou atteignant la surface externe de l'enceinte (40) et logées dans une cavité définie dans la surface externe de l'enceinte (40), sont recouvertes par le joint étanche à l'eau et électriquement isolant (60), ou par un joint étanche à l'eau et électriquement isolant (60) en résine.

8. Dispositif électromagnétique étanche à l'eau selon l'une quelconque des revendications précédentes, dans lequel la surface externe de l'enceinte (40) comporte une rainure longitudinale (41) s'étendant sur toute la longueur de l'enceinte (40) pour l'acheminement de câbles.

9. Procédé de production pour produire un dispositif électromagnétique étanche à l'eau, le procédé comprenant :
la production d'un noyau magnétique (10) entouré par au moins une bobine (20), l'au moins une bobine (20) étant reliée à des broches de connexion (31) d'une carte de circuit électronique (30) ;
l'insertion du noyau magnétique (10), l'au moins une bobine (20) environnante et la carte de circuit électronique (30) dans un moule d'enceinte et la fermeture du moule d'enceinte ;
le surmoulage d'une enceinte (40) au sein du moule d'enceinte de manière étanche à l'eau entourant le noyau magnétique (10), l'au moins une bobine (20) et la carte de circuit électronique (30), l'obtention du dispositif électromagnétique étanche à l'eau, et l'extraction du dispositif électromagnétique étanche à l'eau à partir du moule d'enceinte ;
**caractérisé en ce que**
le noyau magnétique (10) est produit en comportant plusieurs protubérances (11) faisant saillie à partir du noyau magnétique (10), chaque protubérance (11) comportant une pointe de protubérance (12) qui entre en contact avec le moule d'enceinte lorsque le noyau magnétique (10) est introduit dans le moule d'enceinte, assurant un centrage du noyau magnétique (10) au sein du moule d'enceinte pendant le surmoulage de l'enceinte (40).

10. Procédé de production selon la revendication 9, dans lequel les pointes de protubérance (12) entrent en contact avec le moule d'enceinte dans des configurations de centrage en saillie du moule d'enceinte qui déterminent des cavités dans une surface externe de l'enceinte (40), de sorte que les pointes de protubérance (12) correspondent à la surface externe de l'enceinte (40) au sein desdites cavités.

11. Procédé de production selon la revendication 9 ou 10, dans lequel les pointes de protubérance (12) sont recouvertes par un joint étanche à l'eau et électriquement isolant (60), ou par un joint étanche à l'eau et électriquement isolant (60) en résine, avant l'insertion du noyau magnétique (10) dans le moule d'enceinte ou après l'extraction du dispositif électromagnétique étanche à l'eau à partir du moule d'enceinte.

12. Procédé de production selon la revendication 9, 10 ou 11, dans lequel, pour produire le noyau magnétique (10), une portion de la carte de circuit électronique (30) est insérée dans un moule de noyau, et le noyau magnétique (10) est produit par moulage dans ledit moule de noyau, en obtenant un noyau magnétique (10) avec la carte de circuit électronique (30) attachée à celui-ci et partiellement incorporée dans celui-ci dans une position choisie pour maintenir la carte de circuit électronique (30) séparée du moule d'enceinte pendant le surmoulage de l'enceinte (40).

13. Procédé de production selon l'une quelconque des revendications précédentes 9 à 12, dans lequel, avant l'insertion du noyau magnétique (10) dans le moule d'enceinte, les broches de connexion (31) sont reliées à des extrémités électriquement exposées de câbles électriques (50), et ensuite le noyau magnétique (10), l'au moins une bobine (20) et la carte de circuit électronique (30) avec les câbles électriques (50) reliés à celle-ci sont insérés dans le moule d'enceinte, les câbles électriques (50) s'étendant à l'extérieur du moule d'enceinte à travers des ouvertures de sortie de câbles du moule d'enceinte, le surmoulage produisant l'enceinte (40) en incorporant également les broches de connexion (31), l'extrémité électriquement exposée de chaque câble électrique (50) et une portion de chaque câble électrique (50).

14. Procédé de production selon la revendication 13, dans lequel les câbles électriques (50) sont positionnés au sein du moule d'enceinte en positionnant une portion de scellement (51) de chaque câble électrique (50) en correspondance avec des réserves en saillie du moule d'enceinte qui, lorsque le moule d'enceinte est fermé, recouvre la portion de scellement (51) de chaque câble électrique (50) empêchant les portions de scellement (51) d'être incorporées dans l'enceinte (40), les réserves en saillie recouvrant la portion de scellement (51) des câbles électriques (50) étant séparées des ouvertures de sortie de câble du moule d'enceinte d'une distance dans laquelle une portion des câbles électriques sera surmoulée.

15. Procédé de production selon la revendication 14, dans lequel, après l'extraction du dispositif électromagnétique étanche à l'eau à partir du moule d'enceinte, la portion de scellement (51) de chaque câble électrique (50) est recouverte par un joint étanche à l'eau et électriquement isolant (60), ou par un joint étanche à l'eau et électriquement isolant (60) en résine.
